# FASCICULE DE BREVET EUROPEEN

(11) **EP 2 051 477 B1**
(45) Date de publication et mention de la délivrance du brevet: **27.01.2016**
(21) Numéro de dépôt: 08166544.0
(22) Date de dépôt: 14.10.2008
(51) Int. Cl.: H04L 29/12, H04L 29/06, H04L 29/08

(54) **Procédé de traversée d'équipement de traduction d'adresses pour messages de signalisation SIP par utilisation temporaire du protocole de transport TCP**
Verfahren zum Durchleiten von SIP-Nachrichten durch ein Adressenübersetzungsgeräts anhang einer temporären Benutzung des Transportprotokols TCP
Method to cross an equipment of translation of addresses for SIP signalling messages by temporaly using transport protocol TCP

(30) Priorité: 19.10.2007 FR 0758427
(43) Date de publication de la demande: 22.04.2009
(73) Titulaire: ALCATEL LUCENT, 92100 Boulogne-Billancourt (FR)
(72) Inventeur: Froment, Thomas, 91620, NOZAY (FR); Lazar, Marius, BP 57 78141, VELIZY (FR)
(74) Mandataire: Sciaux, Edmond

(56) Documents cités:
- EP-A- 1 841 170
- US-A1- 2007 140 159
- US-B2- 7 245 601
- ROSENBERG ET AL: "RFC 3261: SIP: Session Initiation Protocol" IETF REQUEST FOR COMMENTS, XX, XX, 1 juin 2002 (2002-06-01), pages 1-269, XP002323877
- EGEVANG K ET AL: "RFC 1631 - The IP Network Address Translator (NAT)" INTERNET CITATION, [Online] XP002486273 Extrait de l'Internet: URL:http://www.ietf.org/rfc/rfc1631.txt> [extrait le 1994-05-01]
- SRISURESH P ET AL: "RFC 3022 - Traditional IP Network Translator (Traditional NAT)" INTERNET CITATION, [Online] XP002227044 Extrait de l'Internet: URL:http://kaizi.viagenie.qc.ca/ietf/rfc/r fc3022.txt> [extrait le 2003-01-13]
- SENIE D: "RFC 3235 - Network Address Translator (NAT)-Friendly Application Design Guidelines" INTERNET CITATION, janvier 2002 (2002-01), XP002486274

## Description

La présente invention est relative aux réseaux de communication. Elle concerne plus précisément le problème de la transmission de messages de signalisation au travers d'équipements de traductions d'adresses tels des NAT (« *Network Address Translation* »).

Les réseaux de communication actuels permettant l'établissement de session de communication au moyen de protocoles de signalisation tels H.323, MGCP (Media *Gateway Control* Protocol) ou SIP *(Session Initiation Protocol)* et SDP *(Session Description Protocol).*

Ce protocole SIP est défini par le RFC 3261 de l'IETF (*Internet Engineering Task Force)* et il a pour double but de permettre :
- la mise en relation entre deux parties,
- la négociation des caractéristiques de la session à établir (débit vidéo, encodeur (CODEC) à utiliser, etc.), via le protocole SDP.

La négociation des caractéristiques de session est spécifiée par le RFC 3264, intitulé « SDP offer/answer model »).

Une partie appelante souhaitant appeler une autre partie peut adresser un message de signalisation (« Invite ») à un élément de signalisation, dit « Proxy », contenant son adresse personnelle, l'adresse physique de son terminal (ou, plus généralement, un client) et l'adresse personnelle de la partie appelée. L'élément de signalisation dispose des moyens (« registrar ») pour mettre en correspondance l'adresse personnelle de la partie appelée et l'adresse physique du terminal correspondant. Grâce à cette mise en correspondance, le message de signalisation peut être acheminé à la partie appelante.

Si elle accepte l'appel, celle-ci répond alors par de nouveaux messages de signalisation comportant l'adresse physique du terminal ou client. Ainsi, chacun des deux terminaux connaissant l'adresse physique de l'autre partie, ils peuvent établir une connexion IP *(Internet Protocol)* pour la transmission des données (voix, vidéo...).

Un problème se pose toutefois avec les équipements de traduction d'adresses, connus sous l'acronyme de NAT (« *Network Address Translation »)* ou NAPT (« *Network Adress Port Translation »)* et définis dans le RFC 1631, « The *IP Network Address Translator* », et dans le RFC 3022 « *Traditional IP Network Address Translator (Traditional NAT)* ». Ces équipements sont prévus pour interfacer un premier réseau (typiquement, un réseau privé) avec un deuxième réseau (par exemple, le réseau public Internet).

Les équipements (terminaux) du premier réseau ont des adresses physiques IP dont la validité est limitée à ce premier réseau. Lorsqu'ils souhaitent établir des communications avec des équipements situés en dehors, l'équipement de traduction d'adresses leur affecte une seconde adresse temporaire, valable pour le deuxième réseau, et mémorise l'association entre première et deuxième adresses du client.

L'équipement de traduction d'adresses NAT modifie donc à la volée les messages transmis entre les deux réseaux de communication en :
- transformant les premières adresses des terminaux en seconde adresses, dans les entêtes IP des messages sortants, c'est-à-dire allant du premier réseau vers le second réseau public, et en
- transformant les secondes adresses des terminaux en premières adresses, dans les entêtes IP des messages entrant, c'est-à-dire allant du deuxième réseau vers le premier réseau.

Un équipement de traduction d'adresses, NAT, possède donc une table permettant de mettre en correspondance des premières et secondes adresses. Ces correspondances sont temporaires et sont supprimées lors de la terminaison de la connexion ou session. Ces associations ou mises en correspondance sont classiquement nommées *« binding »* selon la terminologie en langue anglaise.

Un problème se pose donc pour la traversée des équipements de traduction d'adresses par les messages de signalisation SIP/SDP (ou H.323 ou autres). Ce problème est connu sous l'expression « *NAT traversal* » en langue anglaise (traversée de NAT).

Il est par exemple décrit sur l'encyclopédie participative « wikipedia » à l'adresse : « http://en.wikipedia.org/wiki/NAT_traversal.html » et évoqué dans le RFC 3235 de l'IETF, intitulé « Network Address Translation (NAT) - Friendly Application Design Guidelines »*.*

Les protocoles de signalisation, comme SIP et SDP, sont considérés comme des protocoles applicatifs. Le protocole SIP/SDP, par exemple, peut être transmis par le protocole TCP ou UDP, eux-même étant situés au-dessus de IP dans la pile protocolaire. Un message SIP est donc en fait une suite de paramètres encapsulées dans un message TCP ou UDP, lui-même encapsulé dans un message IP.

Les équipements de traduction d'adresses NAT ne modifient que les paramètres situés au niveau de la couche IP, laissant intacts les paramètres situés dans des couches plus hautes.

Autrement dit, les adresses physiques contenues dans les messages SIP et SDP ne sont pas modifiées par les équipements de traduction d'adresses, au contraire des adresses contenues dans les entêtes IP.

Il en résulte que le destinataire (le client appelé) du message de signalisation ne connaîtra que la première adresse du client appelant. Or, celle-ci n'ayant du sens que dans le premier réseau, il ne pourra pas y avoir d'établissement de session de communication.

Ce problème étant bien connu, de nombreuses solutions ont été proposées pour le résoudre. On peut distinguer deux approches principales pour résoudre ce problème : des approches basées sur le client appelant et des approches basées sur un serveur ou un équipement du réseau de communication.

Dans la première catégorie, on peut citer le mécanisme STUN (« *Simple Traversal of UDP through NATs* »), décrit dans le RFC 3489. Ce mécanisme permet à un client (ou terminal) de connaître sa deuxième adresse. Ainsi, préalablement à l'émission d'un message vers le deuxième réseau de communication (par exemple, le réseau public), le client appelant transmet une requête à un serveur STUN situé dans ce deuxième réseau. Celui-ci lui répond par un message contenant l'adresse (et le port) sous laquelle il « voit » le client, c'est-à-dire sa deuxième adresse.

Le client peut alors utiliser cette deuxième adresse pour indiquer, via le protocole SDP, à quelle adresse il souhaite recevoir des réponses.

Cette solution souffre toutefois d'une limitation majeure, puisque de nombreux NAT sont dits « symétriques » et associent une deuxième adresse à un couple de parties. Aussi, la deuxième adresse attribuée par le NAT au client peut être différente pour la communication avec le serveur STUN et pour la session à établir avec l'autre partie. Dans un pareil cas, la communication entre le client et l'autre partie ne peut pas être établie.

D'autres propositions, basées sur le même principe, ont été faites pour améliorer la situation, comme les mécanismes TURN (« *Traversal Using Relay NAT* »). Les spécifications du mécanisme TURN sont disponibles à l'adresse internet http://ietfreport.isoc.org/idref/draft-rosenberg-midcom-turn/

Toutefois ni le mécanisme STUN, ni le mécanisme TURN ne sont adaptés au protocole SIP.

Aussi, un nouveau mécanisme, ICE (« *Interactive Connectivity Establishment* ») a été proposé pour adapter la traversée des messages de signalisation SIP. Il se base sur les mécanismes STUN et TURN en les adaptant.

Les spécifications du mécanisme ICE sont accessibles à l'adresse internet http://ietfreport.isoc.org/idref/draft-ietf-mmusic-ice/

La seconde catégorie de solutions repose sur un équipement au sein du réseau de communication. Il est à noter que les premières solutions mettaient en oeuvre un serveur au sein du réseau (serveur STUN, par exemple), mais l'initiative étant celle du client. Dans cette seconde famille de solutions, au contraire, l'initiative et la mise en oeuvre des solutions de traversée de NAT appartient à un équipement de réseau.

Une première solution appartenant à cette famille est par exemple d'associer une passerelle applicative à l'équipement de traduction d'adresses NAT. Ce mécanisme est connu sous le nom de ALG pour « *Application Layer* Gateway » ou « *Application-level Gateway* » en langue anglaise et est défini dans le paragraphe 2.9 du RFC 2663 intitulé « IP Network Address Translator (NAT) Terminology and Considerations » publié en août 1999.

Cette passerelle (ou un NAT ayant les fonctionnalités d'une telle passerelle) dispose des moyens de compréhension des protocoles applicatifs utilisés par les messages. Elle peut notamment comprendre le contenu des messages de signalisation et traduire les adresses physiques contenues dans les messages SDP afin que les parties échangent leurs deuxièmes adresses et non leurs premières adresses et puissent ainsi établir des sessions de communication.

Une variante de cette solution consiste à utiliser à utiliser un contrôleur de session dit SBC (pour *« Session Border Controller* ») qui se situera sur les chemins des messages de signalisation. Ce type de produit permet de contrôler la transmission des sessions de communication et des messages de signalisation entre les deux réseaux. Plus précisément, le SBC peut jouer le rôle d'un élément de signalisation « proxy » SIP qui peut contrôler des moyens de transmission de média (un « media proxy ») par un protocole tel Megaco afin que les sessions de communication s'établissent convenablement entre les parties.

Mais un autre problème technique se pose en ce que les équipements de traduction d'adresses, NAT, ne conservent pas les correspondances entre premières et deuxièmes adresses après la terminaison de la connexion ou session.

Les messages de signalisation SIP peuvent être transportés par le protocole TCP *(Transmission Control Protocol)* ou UDP *(User Datagram* Protocol). Le protocole TCP conserve une connexion ouverte tant qu'aucune action n'est entreprise pour terminer la session. Aussi, si une session SIP utilisant TCP est utilisé, l'équipement de traduction d'adresse NAT conservera la correspondance jusqu'à la terminaison de la connexion TCP.

Cependant dans le cas du protocole UDP, aucune connexion n'est établie. Aussi, l'équipement de traduction d'adresse, NAT, ne conserve l'association que de façon temporaire, c'est-à-dire jusqu'à l'expiration d'un lapse de temps déterminé à l'avance.

Par conséquent, l'utilisation du protocole UDP pour transporter une signalisation SIP pose des problèmes importants pour la traversée des équipements de traduction d'adresses, NAT.

Mais l'utilisation du protocole TCP pose également des problèmes, dans la mesure où cela oblige les différents acteurs à conserver des connexions ouvertes. Pour ce qui est du serveur, ou « proxy », il doit alors conserver autant de connexions ouvertes que de terminaux, ou clients, SIP avec lesquels il est en communication.

Chaque connexion TCP représentant une quantité importante de données contextuelles, il s'agit là d'une charge importante pour le proxy SIP. L'architecte d'un réseau de communication peut aussi se trouver confronté à des problèmes très concrets comme le seuil maximum de connexion TCP qu'un système d'exploitation comme Linux peut gérer (65535 connexions simultanés).

Aussi, actuellement, la plupart des architectures SIP sont basées sur le protocole de transport UDP.

Afin de palier le caractère temporaire des associations entre premières et deuxièmes adresses, des messages de signalisation sont transmis périodiquement entre les deux parties dans le seul but de conserver l'association active comme décrit dans le document US 7 245601.

Ces messages de signalisation sont habituellement des messages « Register » du protocole SIP, comportant un entête « Expires » contenant la valeur d'expiration de l'association. Cette période d'expiration peut être négocié entre le client et le serveur ou proxy. Par exemple, lors du premier message « Register », le client indique une première valeur. Le serveur ou proxy répond par un message « 200 Ok » contenant une seconde valeur dans l'entête « Expires ». Selon la norme, le client doit alors utiliser cette seconde valeur comme période d'expiration : il enverra alors un message « Register » à intervalles réguliers et déterminés par cette seconde valeur.

Cette approche est connue sous l'expression en langue anglaise de « UDP Hole Punching ».

Toutefois, le protocole TCP présente des avantages qui le rendent nécessaires pour certaines applications.

Par exemple, lorsqu'un message est de taille importante, le protocole UDP le fractionne en datagrammes plus petits, pouvant entrainer des problèmes de fragmentation. Le seuil dépend du réseau de communication et est déterminé par son unité de transmission maximum (MTU pour *« Maximum Transmission Unit* »). Ce seuil est de 1300 octets pour un réseau Ethernet™.

Ainsi qu'explicité par le paragraphe 18.1.1 du RFC 3261, le protocole UDP ne peut plus être utilisé dès lors qu'un message SIP dépasse une taille correspondant à ce seuil moins une valeur tampon de 200 octets. Le protocole TCP (ou un autre protocole permettant un contrôle de congestion) doit alors être utilisé.

Par conséquent, ni l'utilisation du protocole UDP, ni celle du protocole TCP n'est satisfaisante, et il existe un besoin pour une solution palliant les problèmes techniques posés par l'une et l'autre des solutions de l'état de la technique. Le but de la présente invention est de proposer une telle solution.

A cette fin, l'invention a pour premier objet un procédé pour l'établissement d'une session de communication entre un premier client de communication situé au sein d'un premier réseau de communication, et un second client de communication, par l'intermédiaire d'un serveur de signalisation situé dans un deuxième réseau de communication distinct du premier réseau de communication et connecté avec celui-ci par un équipement de traduction d'adresses.

Ce procédé consiste en une étape de maintient de l'association entre une première adresse et une deuxième adresse du premier client de communication au sein de l'équipement de traduction d'adresse, par la transmission de messages d'enregistrement par ce premier client de communication vers le serveur de communication.

Le procédé se caractérise en ce que le serveur de signalisation
- mémorise un message de signalisation entrant provenant du second client de communication et destiné au premier client de communication,
- répond au message d'enregistrement suivant par un message de réponse requérant de la part du premier client de communication l'émission d'un nouveau message d'enregistrement utilisant le protocole TCP, et
- délivre le message de signalisation entrant - préalablement mémorisé - après que le nouveau message d'enregistrement est reçu.

Le premier réseau de communication peut par exemple être un réseau privé et le deuxième réseau de communication, un réseau de communication public.

Les messages d'enregistrement et les messages de réponse peuvent être transportés par le protocole UDP.

Selon un mode de réalisation de l'invention, le serveur de signalisation requiert l'émission d'un nouveau message d'enregistrement utilisant le protocole TCP en transmettant un message « 302 Moved Temporarily ».

Ce message « 302 Moved Temporarily » contient un entête « Contact » contenant un paramètre « Transport » fixé à « TCP ».

Enfin, selon une mise en oeuvre de l'invention, le message de signalisation peut être un message initial conforme au protocole SIP et choisi dans un groupe comprenant les messages de signalisation SIP « Invite », « Subscribe », « Publish », « Refer » et « Message ».

L'invention a également pour objet un serveur de signalisation comportant
- une première interface pour échanger des messages de signalisation avec au moins un client de communication situé au sein d'un premier réseau de communication distinct d'un deuxième réseau de communication au sein duquel est situé le serveur de signalisation, et connecté à celui-ci par un équipement de traduction d'adresses, et
- une seconde interface pour transmettre des messages de signalisation avec d'autres équipements situés au sein du deuxième réseau de communication.

La première interface est prévue pour recevoir des messages d'enregistrement provenant d'un client de communication et destinés à maintenir l'association entre une première adresse et une deuxième adresse du client de communication au sein de l'équipement de traduction d'adresses.

Ce serveur de communication se caractérise en ce que
- il comprend en outre une mémoire pour mémoriser un message de signalisation entrant, provenant de la seconde interface et à destination du client de communication, et en ce que
- la première interface est prévue pour, à la suite de l'arrivée d'un message de signalisation entrant, répondre au message d'enregistrement suivant par un message de réponse requérant de la part du client de communication l'émission d'un nouveau message d'enregistrement utilisant le protocole TCP, et pour délivrer le message de signalisation entrant (préalablement mémorisé) à la suite de la réception de ce nouveau message d'enregistrement.

Enfin, l'invention a pour troisième objet une architecture IMS (« IP *Multimedia Subsystem* ») comportant au moins un élément fonctionnel CSCF (« *Call Session Control Function* ») mettant en oeuvre un tel serveur de communication.

Ainsi, une connexion TCP est établie uniquement lorsqu'il est nécessaire, et il n'est pas nécessaire de maintenir une connexion TCP pour l'ensemble des sessions de communication simultanément. De cette façon, les problèmes posés par un trop grand nombre de connexion TCP ne se posent pas, mais les insuffisances liées au protocole UDP sont résolus par l'établissement d'une connexion TCP « à la demande ».

Le seul inconvénient de la solution selon l'invention est le délai potentiel créé par la mémorisation des messages de signalisation entrants jusqu'à l'établissement de la connexion TCP. Ce délai est déterminé par le délai de rafraichissement.

L'invention, ses caractéristiques et ses avantages apparaîtront de façon plus claire dans la description qui va suivre, en liaison avec les figures annexées.
La figure 1 illustre une architecture dans laquelle le serveur de signalisation selon l'invention est susceptible d'être déployé.
La figure 2 schématise un exemple de dialogue qui peut être mis en oeuvre entre un client de communication et le serveur de signalisation selon l'invention.

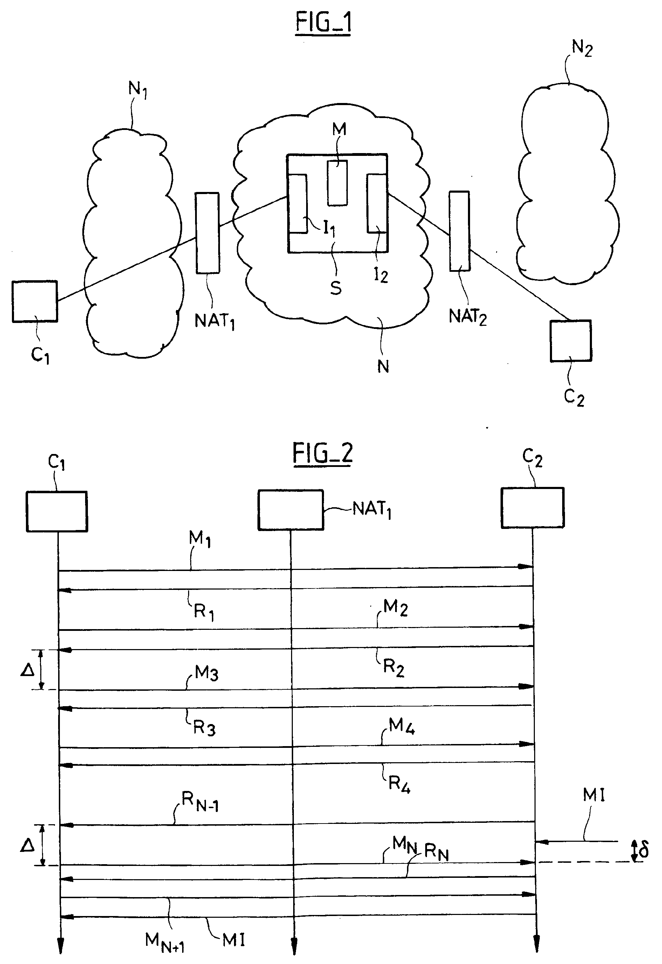

Dans l'exemple d'architecture de réseau illustré par la figure 1, deux clients de communication C₁ et C₂ sont connectés à un réseau de communication N. Le client de communication C₁ appartient à un premier réseau de communication N₁ qui est connecté à un second réseau de communication N par un équipement de traduction d'adresses NAT₁.

Le client de communication C₁ possède une première adresse utilisable au sein du premier réseau de communication N₁ : il peut utiliser cette première adresse pour communiquer avec des équipements appartenant à ce premier réseau (y compris l'équipement NAT₁), mais pas avec des équipements extérieurs. Pour communiquer avec ces équipements extérieurs, une second adresse lui est temporairement attribuée par l'équipement de traduction d'adresses NAT₁.

Cet équipement de traduction d'adresses NAT₁ maintient donc une association entre la première adresse du client C₁ et sa deuxième adresse. Les messages provenant ou à destination de ce client C₁ sont analysés et les premières adresses sont traduites en second adresses et réciproquement.

Le premier réseau de communication peut par exemple être un réseau privé de communication et le second réseau de communication peut être un réseau public.

Le client de communication C₁ peut se connecter au client de communication C₂ par l'intermédiaire du serveur d'un serveur de signalisation S. Ce serveur de signalisation est typiquement un « proxy SIP ». Dans le cadre d'une architecture de type IMS (*IP Multimedia Subsystem*) tel que spécifiée par les organismes de standardisation 3GPP ou TISPAN, ce serveur ou proxy peut être un élément fonctionnel de contrôle de session d'appel, CSCF (*Call Session Control Function).*

Le serveur de signalisation S peut également être un contrôleur de session SBC (« *Session Border Controller*»).

Dans la description qui va suivre, on ne s'intéresse principalement qu'à la connexion entre le client C₁ et le serveur de signalisation S. La connexion entre le client C₂ et le serveur S est donc peu décrite.

L'exemple illustré par la figure 1 représente une mise en oeuvre très simplifié qui permet de mieux comprendre l'invention. Ainsi, le client de communication C₂ appartient à un troisième réseau N₂, connecté au deuxième réseau de communication N par un second équipement de traduction d'adresses NAT₂.

Dans un cas réel de déploiement, d'autres équipements peuvent exister entre le serveur de signalisation S et le client de communication C₂. Celui-ci peut par exemple être connecté à un autre serveur de signalisation, et les deux serveurs de signalisation peuvent communiquer directement ou par l'intermédiaire d'encore d'autres serveurs.

L'exemple donné par la figure 1 permet toutefois de comprendre l'invention, sans en dénaturer l'esprit mais sans se préoccuper des équipements qui n'ont pas un rôle direct à jouer dans le cadre de l'invention.

Afin de maintenir l'association entre les premières et secondes adresses, le client de communication C₁ transmet des messages d'enregistrement vers le serveur de signalisation S. Ces messages sont typiquement transmis de façon périodique après une éventuelle négociation.

La figure 2 schématise l'échange entre le client C₁ et le serveur de signalisation S. Chaque axe vertical représente un élément du réseau, respectivement le client C₁, l'équipement de traduction d'adresses NAT₁ et le serveur de signalisation S. Le temps va croissant en allant vers le bas. Les flèches horizontales représentent les messages de signalisation échangés entre ces éléments.

Le message d'enregistrement M₁ est le message d'enregistrement initial. Il précise une première valeur du délai de rafraichissement. Cette première valeur peut être élevée, par exemple 3600 secondes.

Le serveur de signalisation S répond par un message de réponse R₁ qui peut éventuellement contenir une seconde valeur, par exemple 30 secondes.

Le client C₁ peut alors se baser sur cette seconde valeur, transmise dans le message de réponse R₁. En absence de seconde valeur, il peut se baser sur la première valeur qu'il a lui-même préalablement déterminé.

Selon un intervalle Δ correspondant à cette valeur du délai de rafraichissement ainsi déterminée, le client de communication C₁ transmet un message de signalisation M₂, M₃, M₄... vers le serveur de signalisation S, qui lui répond par des messages de réponse, respectivement R₂, R₃, R₄...

Le serveur de signalisation dispose d'une interface I₁ prévue pour recevoir ces messages d'enregistrement et pour répondre par un message de réponse.

Ces messages d'enregistrement peuvent être des messages « Register » conformes au protocole SIP. Le délai de rafraichissement peut être contenu dans l'entête « Expire » de ces messages. Les messages de réponse peuvent être des messages « 200 Ok » du protocole SIP, et l'éventuel délai de rafraichissement peut être contenu dans un entête « Expire ».

Tous ces messages d'enregistrement M₁, M₂, M₃, M₄... et de réponse R₁, R₂, R₃, R₄... sont transportés par le protocole UDP. Les messages d'enregistrement précisent dans un entête « Via » que le protocole de transport doit être UDP.

Un tel entête Via peut ressembler à :
Via: SIP/2.0/TCP client.a.example.com:5620;branch=z9hG4bK74bf9

Le serveur de signalisation S ne maintient donc aucune connexion TCP ouverte pour gérer la connexion avec le client C₁.

A un moment donné, le serveur de signalisation S peut recevoir un message de signalisation entrant MI provenant du second client de communication C₂. Il peut s'agir d'un message de signalisation « initial » conforme au protocole SIP, comme par exemple un message « Invite », « Subscribe », « Publish », « Refer », « Message ». Le but du message « Invite » est d'inviter le client de communication C₁ à accepter l'établissement d'une session de communication avec le client de communication appelant C₂.

Cette session de communication peut nécessiter l'utilisation du protocole TCP.

Il est possible que ce requis soit systématique et que toute invitation provenant d'un client C₂ engendre la création d'une connexion TCP pour transporter la session à établir.

Il est également possible qu'un choix puisse être fait entre le protocole TCP ou le protocole UDP. Ce choix peut être déterminé par un paramètre au sein de ce message de signalisation entrant MI. Ce paramètre peut être inséré dans l'entête « contact » conformément au protocole SIP.

Le choix peut également être déterminé par le serveur de signalisation S, éventuellement en prenant en compte le (ou les) paramètre inséré dans le message de signalisation entrant MI.

On suppose que la session de communication nécessite l'utilisation du protocole de transport TCP.

Le message de signalisation entrant est reçu par une interface 12 du serveur de signalisation S et est mémorisé temporairement dans une mémoire M. Après avoir émis un message de réponse R_{N-1}, le serveur de signalisation S attend le message d'enregistrement suivant M_{N}. Le temps d'attente δ pour traiter le message de signalisation entrant MI est donc inférieur au délai de rafraichissement Δ.

Le serveur S répond au message d'enregistrement M_{N} par un message de réponse R_{N} requérant de la part du client de communication C₁ l'émission d'un nouveau message d'enregistrement utilisant le protocole TCP.

Selon un mode de réalisation, ce message de réponse peut être un message « 302 Moved Temporarily » conforme au protocole SIP.

Ce type de message contient un entête « Contact » précisant la nouvelle URI *(Universal Resource Identifier)* de l'hôte à contacter. Il contient également un paramètre précisant le protocole de transport avec lequel l'hôte doit être contacté.

Ce paramètre peut être le paramètre « Transport » tel que défini par le RFC 3261 dans la section 20.10

Un entête « Contact » peut par exemple avoir pour forme :
Contact: <sip:bob@192.0.2.4;transport=UDP>;expires=60

Dans le cadre de l'invention, il ne s'agit pas ici d'un véritable changement d'adresse, et donc cet entête contient l'adresse du serveur de signalisation S. Le paramètre précisant le protocole de transport a pour valeur «TCP».

Ainsi, l'utilisation du type de message « 302 Moved Temporarily » permet de transmettre les informations nécessaires sans requérir l'ajout d'un nouveau type de messages dans le protocole SIP existant.

Ce message de réponse R_{N} provoque un nouveau message d'enregistrement M_{N+1} transporté par le protocole TCP.

Ce nouveau message d'enregistrement peut être transmis tout de suite après la réception du message de réponse R_{N}, c'est-à-dire sans attendre le délai de rafraichissement Δ comme auparavant. Ceci permet de diminuer le temps de latence pour le traitement du message de signalisation entrant MI.

Le message d'enregistrement M_{N+1} permet l'ouverture d'une connexion TCP entre le client de communication C1 et le serveur de signalisation S, à travers l'équipement de traduction d'adresses NAT₁.

Une fois la connexion TCP établie, le serveur de signalisation peut délivrer le message de signalisation MI vers le client de communication C₁ destinataire. Il peut alors être supprimé de la mémoire M du serveur de signalisation S.

Lors de la terminaison de la session de communication (un des deux clients de communication raccroche, par exemple), le serveur de signalisation peut transmettre un message de terminaison vers le client de communication C₁.

La connexion TCP peut être terminée à ce moment-là.

Le client de communication C₁ peut alors recommencer à transmettre des messages d'enregistrement transporté par le protocole UDP selon une période Δ, afin de maintenir l'association au sein de l'équipement de traduction d'adresses NAT₁.

Comme on l'a vu, la connexion TCP répond au besoin de certaines applications du protocole TCP.

En outre, elle permet la transmission du message de signalisation entrant MI qui, autrement, pourrait ne pas être possible. En effet, certains équipements de traduction d'adresses disposent de fonction de pare-feu (« *firewall* », en langue anglaise). Ils ne permettent pas la transmission de messages provenant du réseau public N, sauf s'il s'agit d'une réponse à un message émanant du premier réseau N₁ ou dans le cadre d'une connexion TCP.

L'établissement d'une connexion TCP permet alors la transmission du message d'invitation MI à travers le pare-feu NAT₁. L'invention résout donc ce problème technique supplémentaire.

Grâce à l'invention, une connexion TCP n'est ouverte que lors d'une session de communication. Le reste du temps, c'est-à-dire lorsqu'un client de communication est uniquement en attente mais disponible pour émettre ou recevoir des messages d'invitation, un simple échange selon le protocole UDP permet de conserver la connexion avec le serveur de signalisation.

L'invention permet donc d'optimiser l'utilisation des protocoles UDP et TCP afin de bénéficier des avantages de chacun d'entre eux, dans le cadre du protocole SIP.

## Revendications

1. Procédé pour l'établissement d'une session de communication entre un premier client de communication (C₁) situé ou sein d'un premier réseau de communication (N₁), et un second client de communication (C₂), par l'intermédiaire d'un serveur de signalisation (S) situé dans un deuxième réseau de communication (N) distinct dudit premier réseau de communication (N₁) et connecté avec celui-ci par un équipement de traduction d'adresses (NAT₁) ; comportant une étape de maintient de l'association entre une première adresse et une deuxième adresse dudit premier client de communication (C₁) au sein dudit équipement de traduction d'adresse, par la transmission de messages d'enregistrement par ledit premier client de communication (C₁) vers ledit serveur de communication, ledit procédé étant **caractérisé en ce que** ledit serveur de signalisation (S)
- mémorise un message de signalisation entrant (MI) provenant dudit second client de, communication (C₂) et destiné audit premier client de communication (C₁) et utilisant le protocole TCP,
- répond au message d'enregistrement (M_{N}) suivant ledit message de signalisation entrant (MI) et provenant du premier client de communication (C₁), par un message de réponse (R_{N}) requérant de la part dudit premier client de communication (C₁) l'émission d'un nouveau message d'enregistrement (M_{N+1}) utilisant le protocole TCP, et
- délivre audit premier client de communication (C₁) ledit message de signalisation entrant mémorisé (MI), après que le serveur (S) ait reçu un nouveau message d'enregistrement (M_{N+1}) suivant le message de réponse (R_{N}) et provenant du premier client de communication (C1).

2. Procédé selon la revendication précédente, dans lequel ledit premier réseau de communication est un réseau privé et ledit deuxième réseau de communication est un réseau de communication public.

3. Procédé selon l'une des revendications 1 ou 2, dans lequel lesdits messages d'enregistrement et lesdits messages de réponse sont transportés par le protocole UDP.

4. Procédé selon l'une des revendications précédentes, dans lequel ledit serveur de signalisation requiert l'émission d'un nouveau message d'enregistrement utilisant le protocole TCP en transmettant un message « 302 Moved Temporarily ».

5. Procédé selon la revendication précédente, dans lequel ledit message « 302 Moved Temporarily » contient un entête « Contact » contenant un paramètre « Transport » fixé à « TCP ».

6. Procédé selon l'une des revendications précédentes dans lequel ledit message de signalisation est un message initial conforme au protocole SIP et choisi dans un groupe comprenant « Invite », « Subscribe », « Publish », « Refer » et « Message ».

7. Serveur de signalisation (S) comportant :
- une première interface (I₁) pour échanger des messages de signalisation avec au moins un client de communication (C₁) situé au sein d'un premier réseau de communication (N₁) distinct d'un deuxième réseau de communication (N) au sein duquel est situé ledit serveur de signalisation et connecté à celui-ci par un équipement de traduction d'adresses (NAT₁),
- et une seconde interface (I₂) pour transmettre des messages de signalisation avec d'autres équipements situés au sein dudit deuxième réseau de communication ;
ladite première interface (I₁) étant prévue pour recevoir des messages d'enregistrement (R₁, ..., R_{N}) provenant d'un client de communication (C₁) et destinés à maintenir l'association entre une première adresse et une deuxième adresse dudit client de communication (C₁) au sein dudit équipement de traduction d'adresses (NAT₁), ledit serveur de communication (S) étant **caractérisé** en ce qu"il comprend en outre une mémoire (M) pour mémoriser un message de signalisation entrant (MI), provenant de ladite seconde interface (I₂), à destination dudit client de communication (C₁), et utilisant le protocole TCP,
**et en ce que** ladite première interface (I₁) est prévue pour :
- à la suite de l'arrivée d'un messages de signalisation entrant (MI), répondre au message d'enregistrement (M_{N}) suivant ce message de signalisation (MI) par un message de réponse (R_{N}) requérant de la part dudit client de communication (C₁) l'émission d'un nouveau message d'enregistrement (M_{N+1}) utilisant le protocole TCP,
- et pour délivrer, audit client de communication (C₁), ledit message de signalisation entrant (MI), à la suite de la réception de ce message d'enregistrement (M_{N}) suivant ce message de signalisation (MI).

8. Serveur de signalisation selon la revendication précédente, dans lequel ledit premier réseau de communication est un réseau privé et ledit deuxième réseau de communication est un réseau de communication public.

9. Serveur de signalisation selon l'une des revendications 7 ou 8, dans lequel lesdits messages d'enregistrement et lesdits messages de réponse sont transportés par le protocole UDP.

10. Serveur de signalisation selon l'une des revendications 7 à 9, dans lequel ladite première interface est prévue pour requérir l'émission d'un nouveau message d'enregistrement utilisant le protocole TCP en transmettant un message « 302 Moved Temporarily ».

11. Serveur de signalisation selon la revendication précédente, dans lequel ledit message « 302 Moved Temporarily » contient un entête « Contact » contenant un paramètre « Transport » fixé à « TCP ».

12. Serveur de signalisation selon l'une des revendications 7 à 11 dans lequel ledit message de signalisation est un message initial conforme au protocole SIP et choisi dans un groupe comprenant « Invite », « Subscribe », « Publish », « Refer » et « Message ».

## Patentansprüche

1. Verfahren zur Herstellung einer Kommunikationssitzung zwischen einem ersten Kommunikations-Client (C₁), der sich in einem ersten Kommunikationsnetz (N₁) befindet, und einem zweiten Kommunikations-Client (C₂), über einen Signalisierungsserver (S), der sich in einem zweiten Kommunikationsnetz (N) befindet, das sich vom besagten ersten Kommunikationsnetz (N₁) unterscheidet und mit diesem durch eine Adressübersetzungseinrichtung (NAT₁) verbunden ist; umfassend einen Schritt des Aufrechterhaltens der Verbindung zwischen einer ersten Adresse und einer zweiten Adresse des besagten ersten Kommunikations-Clients (C₁) innerhalb der besagten Adressübersetzungseinrichtung, durch die Übertragung von Registrierungsnachrichten vom besagten ersten Kommunikations-Client (C₁) zum besagten Kommunikationsserver, wobei besagtes Verfahren **dadurch gekennzeichnet ist, dass** besagter Signalisierungsserver (S)
- eine eingehende Signalisierungsnachricht (MI) speichert, die vom besagten zweiten Kommunikations-Client (C₂) ausgeht und an den besagten ersten Kommunikations-Client (C₁) gerichtet ist und das TCP-Protokoll verwendet,
- auf die Registrierungsnachricht (M_{N}) nach der besagten eingehenden Signalisierungsnachricht (MI) und ausgehend vom ersten Kommunikations-Client (C₁) antwortet, durch eine Antwortnachricht (R_{N}), die vom besagten ersten Kommunikations-Client (C₁) die Aussendung einer neuen Registrierungsnachricht (M_{N+1}) unter Verwendung des TCP-Protokolls fordert, und
- an den besagten ersten Kommunikations-Client (C₁) die besagte gespeicherte eingehende Signalisierungsnachricht (MI) ausgibt, nachdem der Server (S) eine neue Registrierungsnachricht (M_{N+1}) nach der Antwortnachricht (R_{N}) und ausgehend vom ersten Kommunikations-Client (C1) empfangen hat.

2. Verfahren nach dem vorstehenden Anspruch, wobei besagtes erstes Kommunikationsnetz ein Privatnetz ist und besagtes zweites Kommunikationsnetz ein öffentliches Kommunikationsnetz ist.

3. Verfahren nach einem der Ansprüche 1 oder 2, wobei besagte Registrierungsnachrichten und besagte Antwortnachrichten über das UDP-Protokoll transportiert werden.

4. Verfahren nach einem der vorstehenden Ansprüche, wobei besagter Signalisierungsserver die Aussendung einer neuen Registrierungsnachricht unter Verwendung des TCP-Protokolls fordert, indem eine "302 Moved Temporarily"-Nachricht übertragen wird.

5. Verfahren nach dem vorstehenden Anspruch, wobei besagte "302 Moved Temporarily"-Nachricht eine "Contact"-Kopfzeile umfasst, die einen "Transport"-Parameter umfasst, der auf "TCP" festgestellt ist.

6. Verfahren nach einem der vorstehenden Ansprüche, wobei besagte Signalisierungsnachricht eine Ausgangsnachricht ist, die dem SIP-Protokoll entspricht und in einer Gruppe ausgewählt wird, umfassend "Invite", "Subscribe", "Publish", "Refer" und "Message".

7. Signalisierungsserver (S), umfassend:
- eine erste Schnittstelle (I₁) zum Austauschen von Signalisierungsnachrichten mit mindestens einem Kommunikations-Client (C₁), der sich in einem ersten Kommunikationsnetz (N₁) befindet, das sich von einem zweiten Kommunikationsnetz (N) unterscheidet, in dem sich der besagte Signalisierungsserver befindet und das mit diesem durch eine Adressübersetzungseinrichtung (NAT₁) verbunden ist,
- und eine zweite Schnittstelle (I₂) zum Übertragen von Signalisierungsnachrichten mit anderen Einrichtungen, die sich im besagten zweiten Kommunikationsnetz befinden; wobei besagte erste Schnittstelle (I₁) vorgesehen ist, um Registrierungsnachrichten (R₁, ..., R_{N}) zu empfangen, die von einem Kommunikations-Client (C₁) ausgehen und dazu bestimmt sind, die Verbindung zwischen einer ersten Adresse und einer zweiten Adresse des besagten Kommunikations-Client (C₁) innerhalb der besagten Adressübersetzungseinrichtung (NAT₁) aufrechtzuerhalten, wobei besagter Kommunikationsserver (S) **dadurch gekennzeichnet ist, dass** er weiterhin einen Speicher (M) umfasst, um eine eingehende Signalisierungsnachricht (MI) zu speichern, die von der besagten zweiten Schnittstelle (I₂) ausgeht, gerichtet an den besagten Kommunikations-Client (C₁), und unter Verwendung des TCP-Protokolls,
**und dadurch, dass** besagte erste Schnittstelle (I₁) vorgesehen ist, um:
- infolge der Ankunft einer eingehenden Signalisierungsnachricht (MI) auf die Registrierungsnachricht (M_{N}) nach dieser Signalisierungsnachricht (MI) durch eine Antwortnachricht (R_{N}) zu antworten, die vom besagten ersten Kommunikations-Client (C₁) die Aussendung einer neuen Registrierungsnachricht (M_{N+1}) unter Verwendung des TCP-Protokolls fordert,
- und um an den besagten Kommunikations-Client (C₁) die besagte eingehende Signalisierungsnachricht (MI) auszugeben, infolge des Empfangs dieser Registrierungsnachricht (M_{N}) nach dieser Signalisierungsnachricht (MI).

8. Signalisierungsserver nach dem vorstehenden Anspruch, wobei besagtes erstes Kommunikationsnetz ein Privatnetz ist und besagtes zweites Kommunikationsnetz ein öffentliches Kommunikationsnetz ist.

9. Signalisierungsserver nach einem der Ansprüche 7 oder 8, wobei besagte Registrierungsnachrichten und besagte Antwortnachrichten über das UDP-Protokoll transportiert werden.

10. Signalisierungsserver nach einem der Ansprüche 7 bis 9, wobei besagte erste Schnittstelle vorgesehen ist, um die Aussendung einer neuen Registrierungsnachricht unter Verwendung des TCP-Protokolls zu fordern, indem eine "302 Moved Temporarily"-Nachricht übertragen wird.

11. Signalisierungsserver nach dem vorstehenden Anspruch, wobei besagte "302 Moved Temporarily"-Nachricht eine "Contact"-Kopfzeile umfasst, die einen "Transport"-Parameter umfasst, der auf "TCP" festgestellt ist.

12. Signalisierungsserver nach einem der Ansprüche 7 bis 11, wobei besagte Signalisierungsnachricht eine Ausgangsnachricht ist, die dem SIP-Protokoll entspricht und in einer Gruppe ausgewählt wird, umfassend "Invite", "Subscribe", "Publish", "Refer" und "Message".

## Claims

1. A method for establishing a communication session between a first communication client (C₁) within at least a first communication network (N₁), and a second communication client (C₂), by means of a signalling server (S) located within a second communication network (N) separate from said first communication network (N₁) and connected to it by an address translation device (NAT₁); comprising a step of maintaining the association between a first address and a second address of said first communication client (C₁) within said address translation device, by the transmission of registration messages by said first communication client (C₁) to said communication server, said method being **characterized in that** said signalling server (S)
- saves an incoming signalling message (MI) coming from said second communication client (C₂) and intended for said first communication client (C₁), and using the TCP protocol,
- answers the registration message (M_{N}) following said incoming signalling message (MI) and coming from the first communication client (C₁), with a reply message (R_{N}) requesting from said first communication client (C₁) the transmission of a new registration message (M_{N+1}) using the TCP protocol, and
- delivers to said first communication client (C₁) said saved incoming signalling message (MI) after the server (S) has received a new registration message (M_{N+1}) following the reply message (R_{N}) and coming from the first communication client (C₁).

2. A method according to the preceding claim, wherein said first communication network is a private network and said second communication network is a public communication network.

3. A method according to one of the claims 1 or 2, wherein said registration messages and said reply messages are transported by the UDP protocol.

4. A method according to one of the preceding claims, wherein said signalling server requests the transmission of a new registration message using the TCP protocol by transmitting a "302 Moved Temporarily" message.

5. A method according to the preceding claim, wherein said "302 Moved Temporarily" message contains a "Contact" header containing a "Transport" parameter set to "TCP".

6. A method according to one of the preceding claims, wherein said signalling message is an initial message in accordance with the SIP protocol and chosen from a group comprising "Invite", "Subscribe", "Publish", "Refer", and "Message".

7. A signalling server (S) comprising:
- a first interface (I₁) for exchanging signalling messages with at least one communication client (N₁) located within a first communication network (N₁) separate from a second communication network (N) within which said signalling server is located, and connected to it by an address translation device (NAT₁),
- and a second interface (I₂) for transmitting signalling messages with other devices located within said second communication network;
- said first interface (I₁) being provided to receive registration messages (R₁, ..., R_{N}) coming from a communication client (C₁) and intended to maintain the association between a first address and a second address of said communication client (C₁) within said address translation device (NAT₁), said communication server (S) being **characterized in that** it further comprises a memory (M) for saving an incoming signalling message (MI), coming from said second interface (I₂), intended for said communication client (C₁), and using the TCP protocol,
and **in that** said first interface (T1) is provided to:
- after the arrival of an incoming signalling message (MI), answering the registration message (M_{N}) following that signalling message (MI) with a reply message (R_{N}) requesting from said communication client (C₁) the transmission of a new registration message (M_{N+1}) using the TCP protocol,
- and to deliver, to said communication client (C₁), said incoming signalling message (MI), after the receipt of that registration message (M_{N}) following that signalling message (MI).

8. A signalling server according to the preceding claim, wherein said first communication network is a private network and said second communication network is a public communication network.

9. A signalling server according to one of the claims 7 or 8, wherein said registration messages and said reply messages are transported by the UDP protocol.

10. A signalling server according to one of the claims 7 to 9, wherein said first interface is provided to request the transmission of a new registration message using the TCP protocol and transmitting a "302 Moved Temporarily" message.

11. A signalling server according to the preceding claim, wherein said "302 Moved Temporarily" message contains a "Contact" header containing a "Transport" parameter set to "TCP".

12. A signalling server according to any one of the claims 7 to 11 wherein said signalling message is an initial message according to the SIP protocol and chosen from a group comprising "Invite", "Subscribe", "Publish", "Refer", and "Message".
